# EUROPEAN PATENT SPECIFICATION

(11) **EP 1 717 473 B1**
(45) Date of publication and mention of the grant of the patent: **02.09.2009**
(21) Application number: 05009008.3
(22) Date of filing: 25.04.2005
(51) Int. Cl.: F16D 48/02

(54) **Activation control device for the clutch packs of a hydraulic double clutch**
Betätigungssteuereinrichtung für die Lamellen einer hydraulischen Doppelkupplung
Dispositif de contrôle d'actionnement pour les disques d'un embrayage hydraulique double

(43) Date of publication of application: 02.11.2006
(73) Proprietor: Hoerbiger Antriebstechnik GmbH, 86956 Schongau (DE)
(72) Inventor: Koopmann, Laurent, 8210 Zedelgem (BE)
(74) Representative: Schmitz, Hans-Werner

(56) References cited:
- EP-A- 0 356 527
- EP-A- 1 503 101
- PATENT ABSTRACTS OF JAPAN vol. 011, no. 105 (M-577), 3 April 1987 (1987-04-03) & JP 61 252922 A (KUBOTA LTD; others: 01), 10 November 1986 (1986-11-10)

## Description

The invention concerns an activation control device for the clutch packs of a hydraulic double clutch.

Such a control device is known from EP 0 356 527 A1.

Hydraulic double clutches are used for double clutch transmissions and comprise first and second pressure lines leading from an oil pressure source via respective filling valves in each pressure line to the first and the second clutch pack, respectively.

It is an object underlying the present invention to provide an activation control device according to the preamble part of claim 1 that has improved and safer operating characteristics.

The solution of this object is achieved by the features of claim 1.

The activation control device according to the present invention comprises a draining valve in each of the pressure lines between the filling valve and the clutch pack. This results in the advantage of a fast pressure drop upon draining and provides a redundant control option in case of a valve failure. So, as both pressure lines comprise one valve primarily intended for supplying oil to the clutch packs and thus controlling the clutch pressure and another valve for the purpose of draining the reaction time of the entire activation control device is shorter, and thus the torque transmission can be optimized.

The dependent claims contain advantageous embodiments of the present invention.

According to a specifically preferred embodiment the diameter of the spool of the draining valve is bigger than the diameter of the spool of the filling valve.

Furthermore, it is possible that the drain valves have a symmetric spool design whereas the filling valve can have an asymmetric spool design. However, in general it is also possible that both valve types have the same spool design.

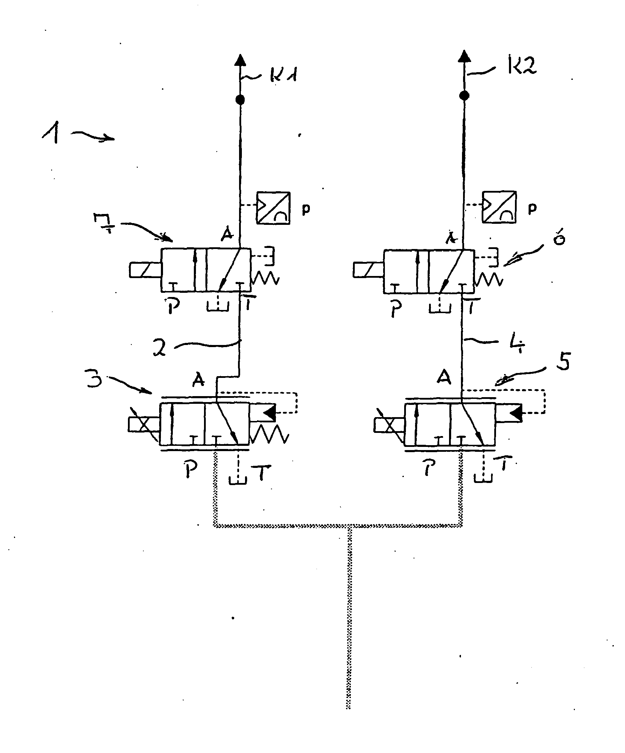

Further features and advantages of the present invention will become apparent from the following description of the single figure of the drawings.

The single figure of the drawings shows a schematically simplified depiction of an activation control device 1 for the clutch packs (represented by arrows K₁ and K₂) of an hydraulic double clutch that is used with a double clutch transmission (not shown).

The activation control device 1 comprises a first pressure line 2 that is equipped with a filling valve 3 and a draining valve 7 downstream of the filling valve 3. So, the draining valve 7 is disposed between the filling valve 3 and the clutch pack K₁.

Furthermore, a second parallel pressure line 4 is provided having a filling valve 5 and a draining valve 6 downstream of filling valve 5 so that also draining valve 6 is disposed between filling valve 5 and clutch pack K₂.

Of course, the pressure lines 2 and 4 are connected to an oil pressure source that is not depicted in the figure.

The connection of the valve terminals P, T, A to the pressure lines 2 and 4 can be gathered from the figure to which is herewith explicitly made reference for the purpose of disclosure.

### List of reference signs

- 1: activation control device
- 2: first pressure line
- 3: filling valve in the first pressure line 2
- 4: second pressure line
- 5: filling valve in the second pressure line 4
- 6: draining valve in the second pressure line 4
- 7: draining valve in the first pressure line 2
- P,T, A: valve terminals
- K₁: first clutch pack
- K₂: second clutch pack of the hydraulic double clutch

## Claims

1. Activation control device (1) for the clutch packs (K₁, K₂) of a hydraulic double clutch comprising:
- a first pressure line (2) having a filling valve (3) and leading from an oil pressure source to the first clutch pack (K₁); and
- a second pressure line (4) having a filling valve (5) and leading from the oil pressure source to the second clutch pack (K₂)
- that a draining valve (6, 7) being disposed in both the first pressure line (2) and the second pressure line (4) between the filling valves (3, 5, respectively) and the first and second clutch packs (K₁, K₂), respectively, wherein the draining valves (6, 7) are on-off 3/2 valves, the activation control device being **characterised in that** the filling valves (3, 5) are proportional pressure reducing valves.

2. Activation control device according to claim 1, being **characterised in that** the diameter of the spool of the draining valves (6, 7) is bigger than the diameter of the spool of the filling valves (3, 5).

3. Activation control device according to one of claims 1 or 2, being **characterised in that** the draining valves (6, 7) have a symmetric spool design.

4. Activation control device according to one of claims 1 to 3, being **characterised in that** the filling valves (3, 5) have an asymmetric spool design.

5. Activation control device according to one of claims 1 to 4, being **characterised in that** the first and the second pressure lines (2 and 4) are disposed in parallel branching off from a central pressure line to the oil pressure source.

## Patentansprüche

1. Betätigungssteuereinrichtung (1) für die Lamellenpakete (K₁, K₂) einer hydraulischen Doppelkupplung, umfassend:
- eine erste Druckleitung (2), die ein Füllventil (3) aufweist und von einer Öldruckquelle zum ersten Lamellenpaket (K₁) führt; und
- eine zweite Druckleitung (4), die ein Füllventil (4) aufweist und von der Öldruckquelle zum zweiten Lamellenpaket (K₂) führt;
- wobei ein Ablassventil (6, 7) sowohl in der ersten Druckleitung (2) als auch in der zweiten Druckleitung (4) zwischen den Füllventilen (3 bzw. 5) und dem ersten bzw. zweiten Lamellenpaket (K₁, K₂) angeordnet ist, wobei die Ablassventile (6, 7) 3/2-Ein-/Aus-Ventile sind,
- wobei die Betätigungssteuereinrichtung **dadurch gekennzeichnet ist, dass** die Füllventile (3, 5) Proportional-Druckverringerungsventile sind.

2. Betätigungssteuereinrichtung nach Anspruch 1, **dadurch gekennzeichnet, dass** der Durchmesser des Steuerschiebers der Ablassventile (6, 7) größer als der Durchmesser des Steuerschiebers der Füllventile (3, 5) ist.

3. Betätigungssteuereinrichtung nach einem der Ansprüche 1 oder 2, **dadurch gekennzeichnet, dass** die Ablassventile (6, 7) eine symmetrische Ausgestaltung der Steuerschieber aufweisen.

4. Betätigungssteuereinrichtung nach einem der Ansprüche 1 bis 3 **dadurch gekennzeichnet, dass** die Ablassventile (6, 7) eine asymmetrische Ausgestaltung der Steuerschieber aufweisen.

5. Betätigungssteuereinrichtung nach einem der Ansprüche 1 bis 4, **dadurch gekennzeichnet, dass** die erste und zweite Druckleitung (2 und 4) parallel angeordnet sind, wobei sie von einer zentralen Druckleitung zur Öldruckquelle abzweigen.

## Revendications

1. Dispositif de commande d'actionnement (1) pour les ensembles embrayages (K₁, K₂) d'un double embrayage hydraulique comprenant :
- une première conduite de pression (2) comportant une soupape de remplissage (3) et allant d'une source de pression d'huile au premier ensemble embrayage (K₁) ; et
- une seconde conduite de pression (4) comportant une soupape de remplissage (5) et allant de la source de pression d'huile au second ensemble embrayage (K₂) ;
- une soupape de vidange (6, 7) disposée dans la première conduite de pression (2) et la seconde conduite de pression (4) entre les soupapes de remplissage (3, 5, respectivement) et les premier et second ensembles embrayages (k₁, K₂), respectivement, dans lequel les soupapes de vidange (6, 7) sont des soupapes 3/2 de marche-arrêt, le dispositif de commande d'activation étant **caractérisé en ce que** les soupapes de remplissage (3, 5) sont des réducteurs de pression proportionnels.

2. Dispositif de commande d'actionnement selon la revendication 1, **caractérisé en ce que** le diamètre du tiroir des soupapes de vidange (6, 7) est supérieur au diamètre du tiroir des soupapes de remplissage (3, 5).

3. Dispositif de commande d'actionnement selon une des revendications 1 ou 2, **caractérisé en ce que** les soupapes de vidange (6, 7) possèdent une conception de tiroir symétrique.

4. Dispositif de commande d'actionnement selon une des revendications 1 à 3, **caractérisé en ce que** les soupapes de remplissage (3, 5) possèdent une conception de tiroir asymétrique.

5. Dispositif de commande d'actionnement selon une des revendications 1 à 4, **caractérisé en ce que** les première et seconde conduites de pression (2 et 4) sont disposées en parallèle, bifurquant d'une conduite de pression centrale à la source de pression d'huile.
